# EUROPEAN PATENT SPECIFICATION

(11) **EP 2 354 050 B1**
(45) Date of publication and mention of the grant of the patent: **19.09.2012**
(21) Application number: 11152858.4
(22) Date of filing: 01.02.2011
(51) Int. Cl.: B65G 21/20

(54) **System for adjusting the side facing guides of conveyors**
System zur Einstellung der zur Seite hin ausgerichteten Führungen von Förderern
Système pour le réglage de guides latéraux de convoyeurs

(30) Priority: 09.02.2010 IT PR20100010
(43) Date of publication of application: 10.08.2011
(73) Proprietor: Sipac S.P.A., 43121 Parma (IT)
(72) Inventor: Azzali, Corrado, 43121 Parma (IT)
(74) Representative: Benelli, Cristian

(56) References cited:
- EP-A1- 1 840 051

## Description

### FIELD OF THE INVENTION

The present invention refers to the field of conveying systems and, more specifically, refers to a system for adjusting the side facing guides of continuous conveyors.

### STATE OF THE ART

The side conveying guides of articles conveyors of different types are known, their purpose is to promote the transport and to keep the correct position of the articles.

In order to handle articles of different sizes or volumes or shapes, it is also known the use of format changing systems for adjusting the guides which, substantially, approach or move away said side guides one from the other for adjusting their available flow cross-section.

Said systems having adjustable guides are used in several fields, for example, in bottling, packaging lines, etc.

A good system having adjustable guides has many problems difficult to solve: on the one hand, the adjustment must be accurate without clamping the article, on the other hand, it is necessary to maintain constant, along the transport line, the widths between the facing guides. Further, since it is very common a change of size of the articles to be conveyed, it is essential to quickly adjust the system to different sizes.

Some adjustment systems are still of the manual type, that is, for performing an accommodation, an operator rotates adjustment knobs or worms in order to manually guide in the desired position said side guides. It is apparent that said systems do not offer a quick adjustment because usually said systems are distributed along the line and therefore their adjustment requires the operator to physically walk along each segment to manually orient and adjust the width between the facing guides and repeat this procedure for each section. Moreover, sometimes this procedure must be repeated on both sides of the conveyor belt.

Instead, other adjustment systems are automatic and use mechanical transmission systems for controlling one ore more conveyor sections and also, sometimes, both the side guides by one operation.

The present invention belongs to the latter type of adjustment systems.

EP 1 840 051 A1 discloses a system for adjusting side guides according to the preamble of claim 1. The actuation of the adjustment device is made by threaded rods.

### DISCLOSURE AND ADVANTAGES OF THE INVENTION

Object of the present invention is to provide a system for adjusting the side guides of conveyors which is less complex than the systems of the prior art.

The system, object of the present invention, is defined in the appended claims.

### BRIEF DESCRIPTION OF THE FIGURES

This and other characteristics will be better understood by the following description of some embodiments illustratively shown in a non-limiting way in the attached drawings:
- Figure 1 is a plan view of a segment of the conveyor with the guide adjustment system, object of the invention,
- Figure 2 is a front view of the device of Figure 1,
- Figure 3 is a plan view,
- Figure 4 is a plan view of the adjusting device operated to approach facing side guides,
- Figure 5 is a plan view with the adjusting device operated to move away the facing side guides,

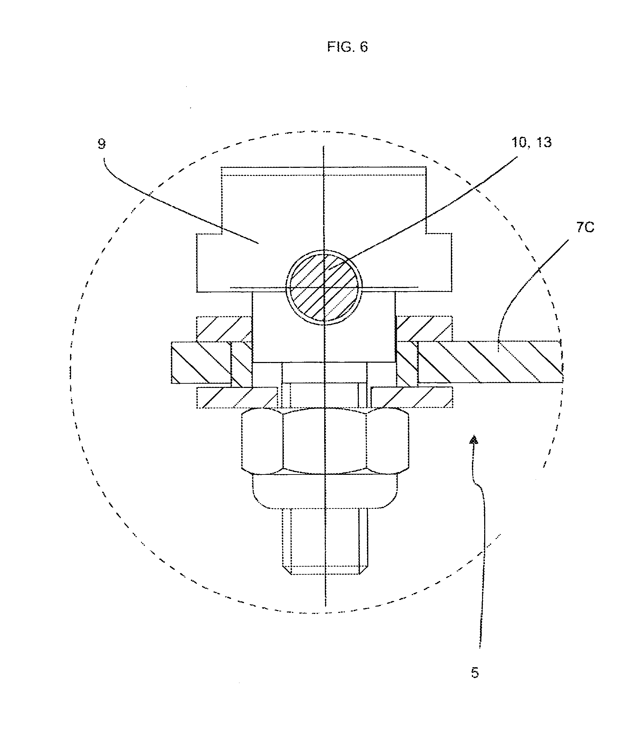

- Figure 6 is a portion of a pin for fixing a drive rod or cable,

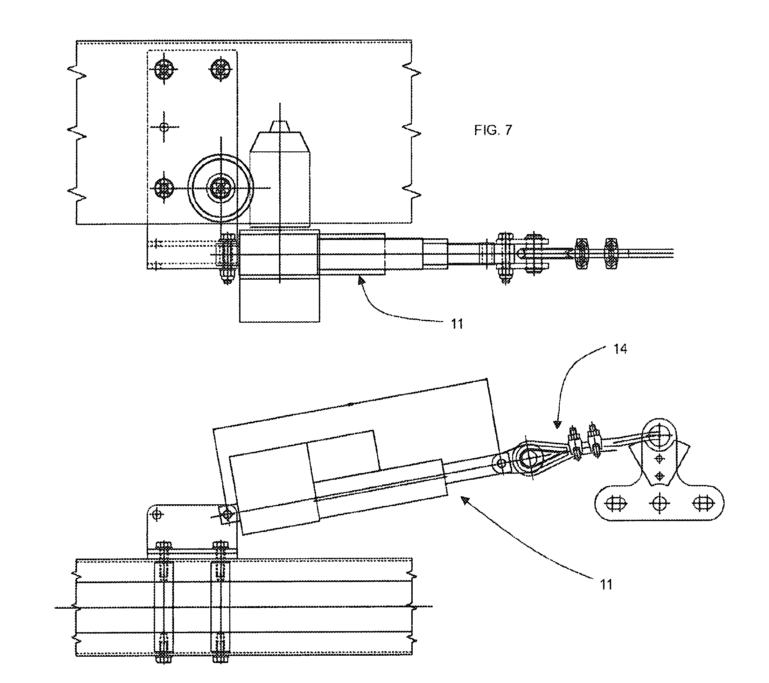

- Figure 7 is a detail of the handling actuator, located at one end of the cable operating the system,

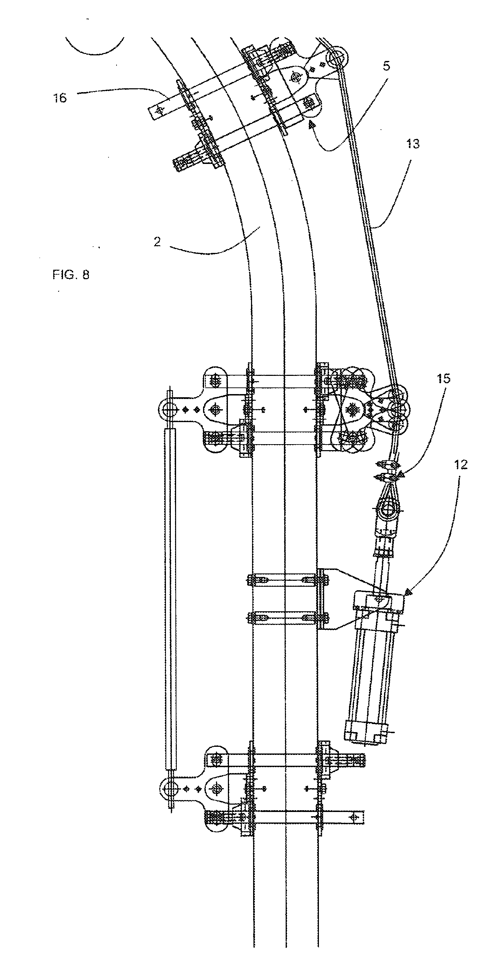

- Figure 8 is a detail of the air cylinder for adjusting the tightness of the flexible cable, located at the other end of the operating cable,
- Figure 9 shows a variant of the side guide adjustment system of conveyors, comprising now more rows of conveyors and guides, which can be driven to be opened and closed by the system of the invention,
- Figure 10 is a front cross-section of the device of Figure 9.

### DESCRIPTION OF THE INVENTION

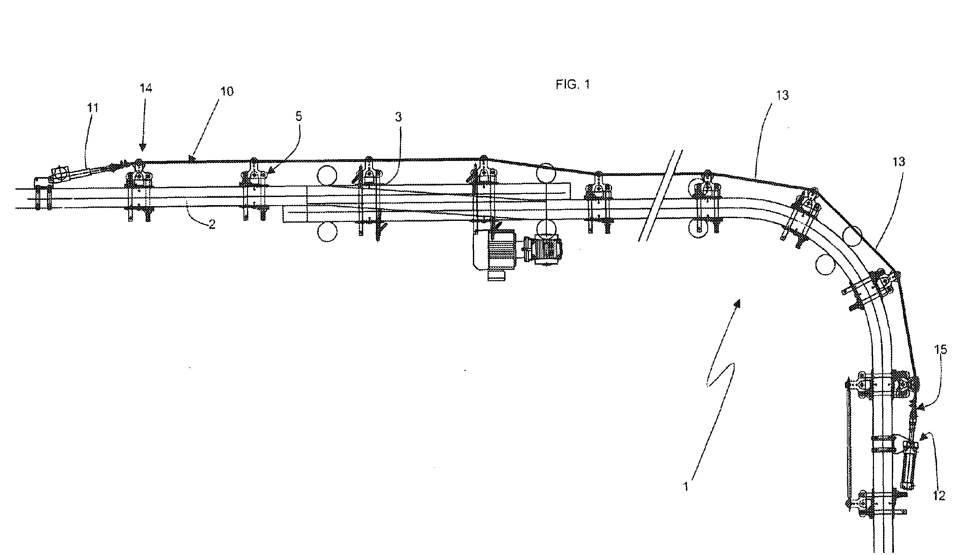

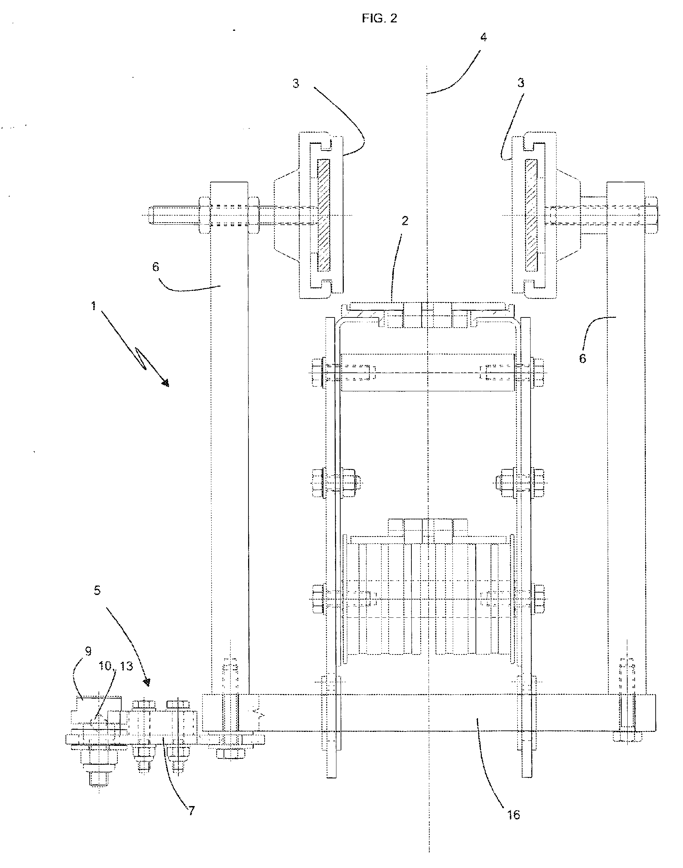

Particularly referring to Figures 1 and 2, 1 shows as a whole a segment of a continuous conveyor with the side guide adjustment system object of the invention. 2 shows the conveyor having, in this example, two rectilinear orthogonal segments joined by a curvilinear segment.

3 shows the conveying side guides, located one in front of the other with respect to a centre line 4 of the conveyor 2. As said before, the purpose of the guides is to keep stable the articles by promoting their transport. In order to handle articles of different sizes and/or shapes, a plurality of devices, generally indicated at 5, are located along said conveyor 2 to enable a format change, that is, a width adjustment, with respect to the centre line 4, of the guides 3. Said device 5 approaches or moves away two vertical facing rods 6 integral, at their upper ends, to said guides 3.

Each vertical rod 6 is in turn driven and supported by a second linear handling means, that is, a second rod 16, arranged below and substantially orthogonal to the conveyor 2. While an end is integral to the rod 6, the other end is hinged to arms 7A and 7B of a substantially "T"-shaped compensator 7, the segment 7C of the "T" being opposite to the conveyor 2, so that said arms 7A and 7B are adjacent the conveyor.

Said compensator 7 is hinged to a stationary structure 8 in turn integral to the conveyor 2, and located on the same side. In this way said compensator 7 can rotate with respect to a vertical rotation axis: precisely, said rotation centre C is on the median axis of the "T" and at the intersection of the arms 7A and 7B.

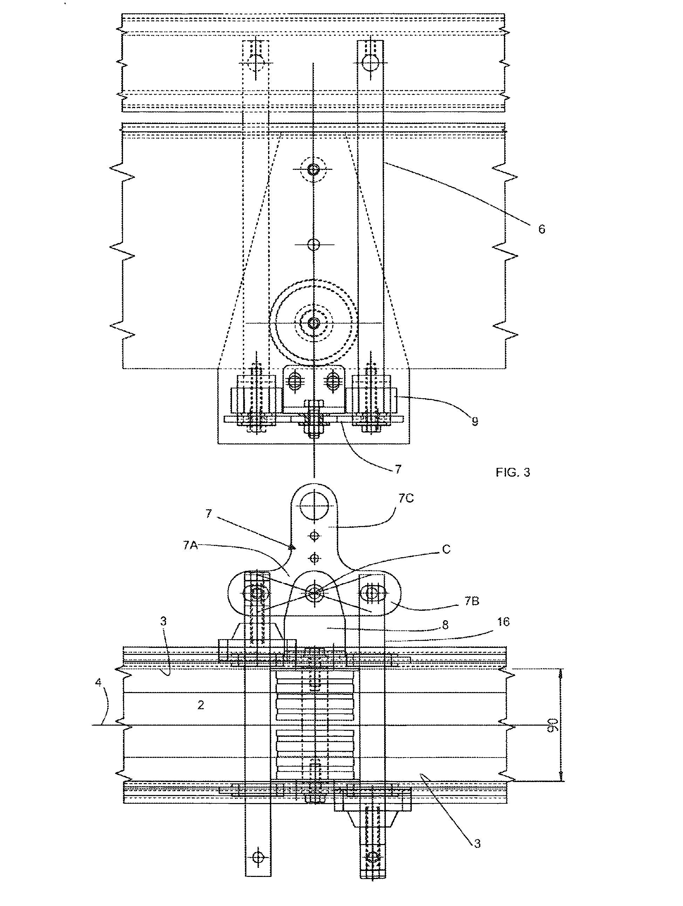

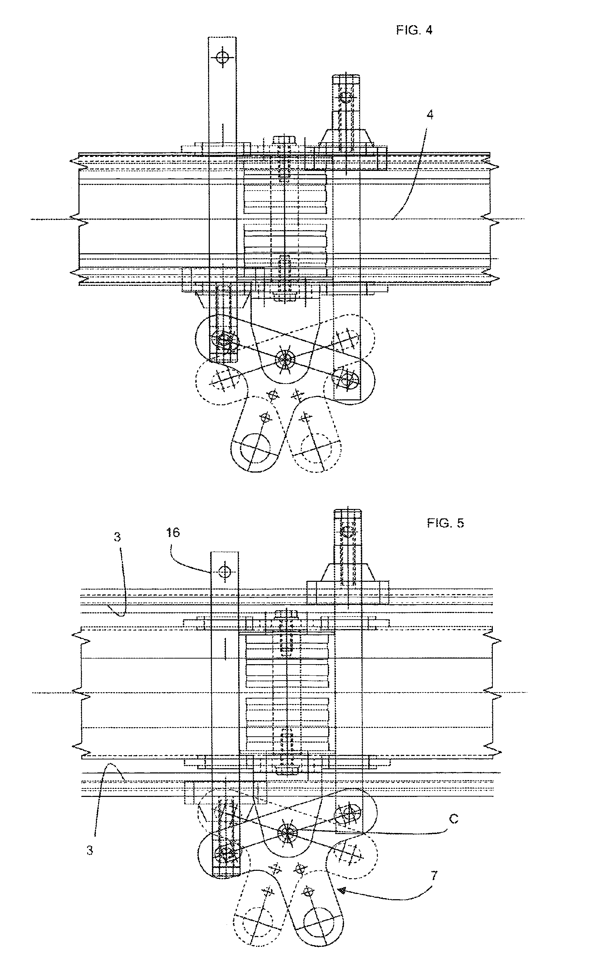

It follows that the compensator can be located with the segment 7C perfectly orthogonal to the conveyor, as shown in Figure 3, or rotated with a varying tilt, as shown in Figures 4 and 5. For the latter arrangement, Figure 5, an arm approaches the conveyor while the other arm moves away and since one of the two arms, by passing under the conveyor 2, is integral, by means of the rod 6, to the guide 3 on the other side, it follows that both guides 3 move according to an opening or closing direction with respect to the centre line 4 of the conveyor 2.

The system can advantageously obtain in this way a quick adjustment of the guides.

For obtaining a quicker adjustment, the system of the invention can electromechanically drive more devices 5 located along the conveyor, as shown in Figure 1.

To this end, adjacent the end defined by the segment 7C of the compensator 7, there is a hole in which it is fixed a pin 9 freely rotating with respect to its axis 9B which can cause the compensator 7 rotation by the thrust or traction exerted by a bar 10 substantially orthogonal to the rod 7C and generating the moment necessary with the arm 7C adapted to rotate the system with respect to the rotation centre C.

Said bar 10 is inserted in a corresponding hole 9A of the pin 9 and it is fixed to it.

The bar 10 is stiff along the linear segment of the conveyor 2 and connects a plurality of devices 5, while along the curvilinear segments (see Figure 1), the bar 10 extends integrally with a flexible strand 13 enabling to divide the curve in several segments while it is engaged integrally to the pins 9 of the corresponding devices 5.

Substantially, said bar 10 acts as a stiff cable. Anyway, the bar 10 and/or the flexible strand 13 connect and drive the devices 5 located on the same side.

Generally, the cable defined by joining different stiff cables 10 and flexible strands 13 is displaced by means 11 and 12 connected at the ends indicated at 14 and 15; precisely, the means are a linear actuator 11 and an air cylinder 12.

The actuator 11 is the element which pushes or pulls the cable, and it is also connected to a position transducer in order to track the imparted displacement in order to compute the compensator 7 rotation angle and the opening or closing variation of the guides 3.

The air cylinder 12 mainly has the function of keeping taut the one or more flexible cables 13 possibly present and located along the curvilinear segments of the conveyor 2.

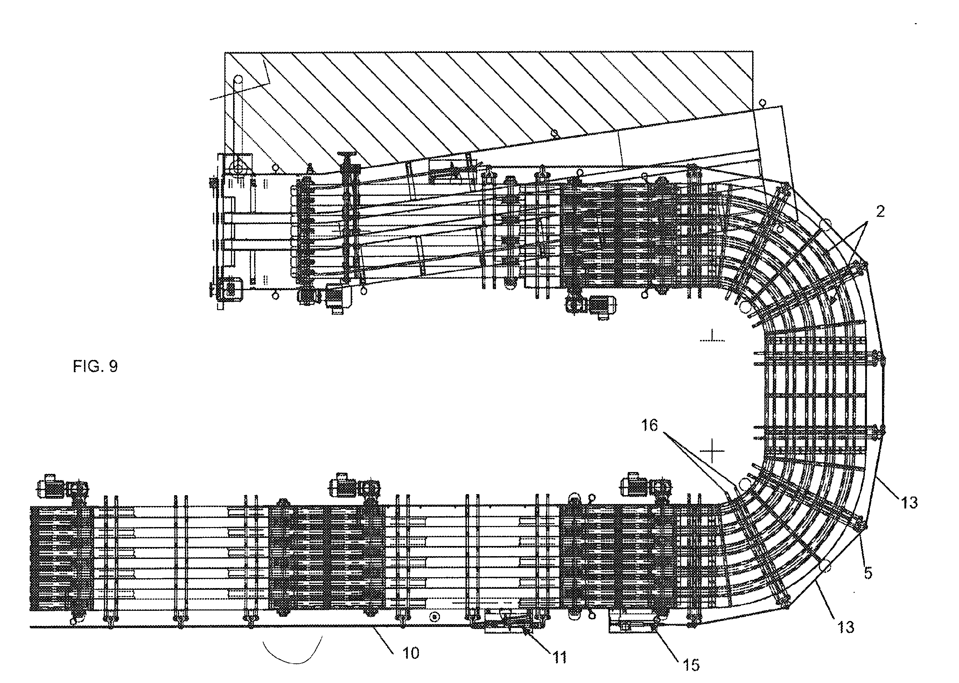

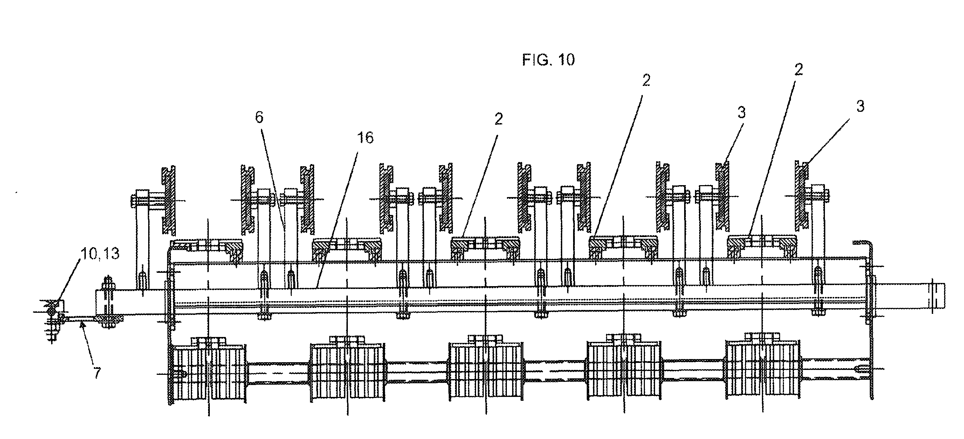

Referring particularly to Figures 9 and 10, 100 indicates, as a whole, a portion of a group for conveying objects formed now by a series of parallel conveyors 2 and adjustable by the side guide adjustment system object of the invention.

It is to be observed that each conveyor 2 is provided with conveying side guides 3, each of them being located one in front of the other with respect to the centre line 4 of the conveyor 2.

It is to be observed that at the side of one of the conveyors 2, there are a plurality of devices 5 for adjusting the width, with respect to the centre line 4, of all the guides 3.

Indeed, the device 5 drives the vertical and facing rods 6 to approach them or to move them away, said rods 6 being integral with said guides 3; the rods 6 being in turn driven and supported by two rods 16; obviously in the present example, which can be defined multiple conveyors, the rods 16 have a length suitable to displace also the rods 6 of the farther conveyors 2.

As before, the two rods 16 are hinged to the arms 7A and 7B of the "T"-shaped compensator 7 and located with the segment 7C of the "T" opposite with respect to the conveyor 2, so that said arms 7A and 7B are adjacent the conveyor.

Adjacent the end defined by the segment 7C of the compensator 7 there is a hole in which is fixed a pin 9 freely rotating with respect to its axis 9B but which can cause the rotation of the compensator 7 by the thrust or traction exerted by a bar 10 substantially arranged orthogonal to the rod 7C and generating the moment necessary by the arm 7C adapted to rotate the system with respect to the rotation centre C.

Said bar 10 is inserted in a corresponding hole of the pin 9 and is fixed to it.

## Claims

1. System for adjusting side guides (3) of conveyors (2), said conveyors comprising longitudinal sections and/or connecting curved sections, said side guides (3) facing each other with respect to its centre line (4), said system comprising a plurality of devices (5) for adjusting the distance between facing guides (3), which drive, by a compensator (7), vertical rods (6) reciprocally departing or approaching, said rods (6) being integral with said guides (3); said compensator (7) being capable of rotating around a vertical rotation axis, wherein said rotation centre (C) is positioned on the compensator (7) axis and at the intersection of its two arms (7A) and (7B), wherein said plurality of devices (5) is driven by a cable formed by one or more stiff strands (10) and /or one or more flexible strands (13) reciprocally integral, **characterized by** the fact that the cable is linearly moved by a linear actuator (11) and a pneumatic cylinder (12) connected to the ends (14 and 15) of the cable and being:
a. the actuator (11), the element in charge of pushing or pulling the cable, being also connected to a position transducer,
b. the pneumatic cylinder (12), the element in charge of maintaining stretched the one or more flexible strands (13), if they are present and arranged along the conveyor (2) curved sections.

2. System according to claim 1, **characterized by** the fact the stiff strands (10) and/or the one or more flexible strands (13) connect and drive the devices (5) positioned on the same side.

## Patentansprüche

1. System zum Einstellen der seitlichen Führungen (3) von Förderern (2), wobei die besagten Förderer längliche und/oder gekrümmte VerbindungsAbschnitte umfassen, wobei die besagten Führungen (3) einander zugewandt in Bezug auf ihre Mittellinie (4) sind, wobei das System eine Vielzahl von Vorrichtungen (5) zum Einstellen des Abstands zwischen einander zugewandten Führungen (3) umfasst, die durch einen Kompensator (7) vertikale sich wechselseitig entfernende oder annähernde Stangen (6) steuern, wobei der besagte Kompensator (7) in der Lage ist um eine vertikale Drehachse zu drehen, wobei der besagte Drehpunkt (C) auf der Achse des Kompensators (7) und bei der Kreuzung ihrer zwei Arme (7A) und (7B) angeordnet ist, wobei die besagte Vielzahl von Vorrichtungen (5) durch ein Kabel mit einem oder mehreren steifen Stränge (10) und/oder mit einen oder mehreren wechselseitig integrierten flexiblen Stränden (13) angetrieben wird, **dadurch gekennzeichnet, dass** das Kabel mittels eines linearen Aktuators (11) linear bewegt wird, und ein Pneumatik-Zylinder mit den Enden (14H und H15) des Kabels verbunden ist, wobei:
a. der Aktuator (11) ist ein fürs Schieben oder Ziehen des Kabels verantwortliches Element, und ist mit einem Wegaufnehmer verbunden,
b. der Pneumatik-Zylinder (12) ist ein verantwortliches Element, um die eine oder mehrere flexible Strände (13) gespannt zu halten, wenn sie längs der gekrümmten Bereiche des Förderers (5) vorhanden und angeordnet sind.

2. System nach Anspruch 1, **dadurch gekennzeichnet, dass** die steifen Stränge (10) und/oder die eine oder mehrere flexiblen Strände (13) die Vorrichtungen (5) verbinden und steuern, die auf derselben Seite positioniert sind.

## Revendications

1. Système pour régler de guides latéraux (3) de convoyeurs (2), lesdits convoyeurs (2) comprenant des sections longitudinales et/ou des sections incurvées de connexion, lesdits guides latéraux se faisant face par rapport à leur axe médian, ledit système comprenant une pluralité de dispositifs (5) de réglage de la distance entre les guides (3) faisant face, qui entraînent, par un compensateur (7) des tiges verticales (6) réciproquement au départ ou à l'approche, lesdites tiges (6) étant intégrées avec lesdits guides (3) ; ledit compensateur (7) étant capable de tourner autour d'un axe de rotation vertical, dans lequel ledit centre de rotation ( C) est positionné sur l'axe du compensateur (7) et à l'intersection de ses deux bras (7A) et (7B), dans lequel ladite pluralité des dispositifs (5) est entraînée par un câble formé par un ou plusieurs brins rigides (10) et/ou par un ou plusieurs brins flexibles (13) réciproquement intégrés, **caractérisé en ce que** le câble est déplacé linéairement par un actionneur linéaire (11) et un cylindre pneumatique (12) connecté aux extrémités (14 et 15) due câble, et
a. l'actionneur (11), l'élément chargé de pousser ou tirer le câble, étant aussi connecté à un transducteur de position,
b. le cylindre pneumatique (12), l'élément chargé de maintenir tendu l'un o les plusieurs brins flexibles (13), s'ils sont présent et arrangés le long des sections incurvées du convoyeur (2).

2. Système selon la revendication 1, **caractérisé en ce que** les brins rigides (10) et/ou l'un ou les plusieurs brins flexibles (13) connectent et actionnent les dispositifs (5) positionnés sur le même côté.
